# EUROPEAN PATENT APPLICATION

(11) **EP 2 803 412 A2**
(43) Date of publication of application: **19.11.2014**
(21) Application number: 14160434.8
(22) Date of filing: 18.03.2014
(51) Int. Cl.: B01L 3/02, B01L 9/00, G01N 35/10, G01N 35/04

(54) **Device and Method for Supplying Disposable Tips to a Pipetting System**

(30) Priority: 17.05.2013 GB 201308942
(71) Applicant: Stratec Biomedical AG, 75217 Birkenfeld-Graefenhausen (DE)
(72) Inventor: Lowien, Thomas, 75217 Birkenfeld (DE)
(74) Representative: Tegethoff, Sebastian

(57) **Abstract**

A device for supplying in a continuous manner a plurality of disposable tips to a pipetting system is provided. The device comprises at least one guiding rail for guiding a plurality of tip trays holding the plurality of disposable tips from a loading position to a supply position. The loading position is accessible by a user or loading means for loading the plurality of tip trays on at the least one guiding rail. The plurality of disposable tips is accessible at the supply position by a means for delivering selected ones of the plurality of disposable tips to the pipetting system. The device is adapted for removal of supplying ones of the plurality of tip trays from the supply position.

## Description

The invention relates to a device and a method for supplying in a continuous manner disposable tips to a pipetting system.

### Background of the invention

The preparation and analysis of samples is part of the everyday practice in laboratory or clinical work. The formerly manual practice is increasingly becoming automatized and parallelized, thus achieving higher efficiency and precision in the preparation and analysis of samples.

A device often used in the preparation and analysis of liquid samples is a pipetting system with pipettes for aspirating or releasing certain volumes of a liquid. In clinical and laboratory analyses, high hygiene standards have to be met. This means that any two different liquid samples must not come into contact unless deliberately so intended. After handling a first liquid sample, any pipette or parts thereof thus have to be at least either cleaned and potentially decontaminated, or even replaced.

Two forms of pipettes are known. One form uses pipetting needles, e.g. made from steel, connected to a pump via a pipetting tube. The liquid sample in this case completely fills the pipetting needle and also part of the pipetting tube. The other form of pipette works with disposable tips, e.g. made from plastic, which are attached to the pipetting body. In this case the liquid sample only enters the disposable tip.

In case of the first form of pipettes using pipetting needles, means for rinsing of the pipetting needles and the pipetting tube has to be provided and connected to the pipette. Replacing the pipetting needle and the pipetting tube can be very tedious and time consuming, often requiring the skill of a specialized technician.

In case of pipettes using disposable tips, before handling a different liquid sample the disposable tip is discharged. Pipetting systems with mechanisms for the discharging of the disposable tips are known, such as the discharging mechanism disclosed in DE 10 2006 034 245 B4. The discharged disposable tips may be collected in a container.

The pipetting system using disposable tips may also comprise an attaching mechanism for attaching the disposable tip in a fluid tight manner to the pipette. The attaching and the discharging of the disposable tips can be automatized, thus accelerating the replacement of a disposable tip. Large numbers of sample preparations and analyses can thereby be achieved. However, these large numbers require a continuous provision of disposable tips to the pipetting systems in order to avoid interruptions in the workflow of the pipetting system. Interruptions in the workflow result in prolonged sample preparation and analysis times.

Currently known devices for supplying disposable tips to a pipetting system comprise drawers, which are accessible by a user. The number of drawers conventionally is two. The user can place into one of the drawers one or several tip trays holding disposable tips. Once the user closes the drawer the disposable tips are accessible by the pipetting system. A drawer in use for tip-picking by the pipetting system is not accessible by the user until all disposable tips have been used up. Thus, for continuous supply of disposable tips at least a second drawer has to be provided.

It is a disadvantage in conventional loading systems to use at least two drawers. Thus, more space is necessary for supplying disposable tips to the pipetting system.. It is a further disadvantage that the user cannot not reload a drawer as long as it is in use by the pipetting system. The user is thus completely dependent on the workflow of the pipetting system, which restricts management and use of the user's time while the pipetting system is in the course of processing.

### Object of the invention

It is an object of the present invention to provide a device and a method for supplying in a continuous manner disposable tips to a pipetting system.

### Summary of the invention

A device for supplying in a continuous manner disposable tips to a pipetting system is provided.

The device for supplying in a continuous manner a plurality of disposable tips to a pipetting system comprises at least one guiding rail for guiding a plurality of tip trays holding the plurality of disposable tips from a loading position to a supply position. The loading position is accessible by a user or loading means for loading the plurality of tip trays on the at least one guiding rail. The plurality of disposable tips is accessible at the supply position by a means for delivering at least one selected one of the plurality of disposable tips to the pipetting system. The device is further adapted for removal of at least one supplying one of the plurality of tip trays from the supply position.

The device may further comprise a container for the discharge of the at least one supplying one of the plurality of tip trays removed from the supply position.

The device may comprise a means for monitoring consumption of the at least one selected one of the plurality of disposable tips.

The device may further comprise a means for moving the plurality of tip trays along the at least one guiding rail.

The means for moving the plurality of tip trays along the at least one guiding rail may comprise at least one belt, at least one cam attached to the belt, and at least one motor for moving the belt using a plurality of pulleys, wherein the at least one cam is adapted to move at least one contacted one of the plurality of tip trays.

The device may further comprise a controller for controlling the means for moving the plurality of tip trays along the at least one guiding rail, and for controlling the removal of the at least one supplying one of the plurality of tip trays from the supply position, the controller receiving data pertaining to the consumption of the at least one selected one of the plurality of disposable tips.

The device may further comprise a plurality of sensors for monitoring of the loading of the plurality of tip trays and of the removal of the at least one supplying one of the plurality of tip trays from the supply position, the plurality of sensors transmitting to the controller data pertaining to the monitoring.

The sensors may comprise at least one first light barrier in proximity to the loading position and at least one second light barrier in proximity to the supply position.

The device may further comprise positioning means for positioning of the at least one supplying one of the plurality of the tip trays located at the supply position.

A method for supplying in a continuous manner a plurality of disposable tips to a pipetting system is provided. The method comprises the steps of: loading at a loading position at least one tip tray holding at least one disposable tip, moving of the at least one tip tray to a supply position, delivering to a pipetting system of the at least one disposable tip, removing of the at least one tip tray from the supply position.

The step of moving of the at least one tip tray to the supply position may comprise moving the at least one tip tray along at least one guiding rail.

The step of loading at the loading position of the at least one tip tray holding the at least one disposable tip may comprise a monitoring thereof and a transmitting of first data related thereto to a controller. The monitoring of the loading may comprise optically detecting a presence or absence at the loading position of the at least one tip tray.

The step of the moving of the at least one tip tray to the supply position may comprise a controlling thereof.

The step of removing of the at least one tip tray from the supply position may comprise a monitoring thereof and a transmitting of second data related thereto to a controller. The monitoring of the removing may comprise optically detecting a presence or absence at the supply position of the at least one tip tray. The step of removing of the at least one tip tray from the supply position may further comprise discharging of the at least one tip tray into a container.

### Brief description of the figures

Fig. 1 shows a view of a device according to the invention from a first angle.
Fig. 2a shows an empty tip tray.
Fig. 2b shows the tip tray holding a plurality of disposable tips.
Fig. 3 shows a view of the device Fig. 1 from a angle similar to the first angle in Fig.1, with a trip tray in the course of being loaded at the loading position.
Fig. 4 shows a view of the device in Fig. 1 from a second angle, without a loading frame at the loading position and without housing elements attached to either side of the device in the direction of movement of the tip trays.
Fig. 5 shows a side view of a longitudinal section of the device in Fig. 1 along the direction of movement of the tips trays.

### Detailed description of the invention

The problem is solved by the features as contained in the independent claims, with advantageous embodiments being described by the features as contained in the independent claims.

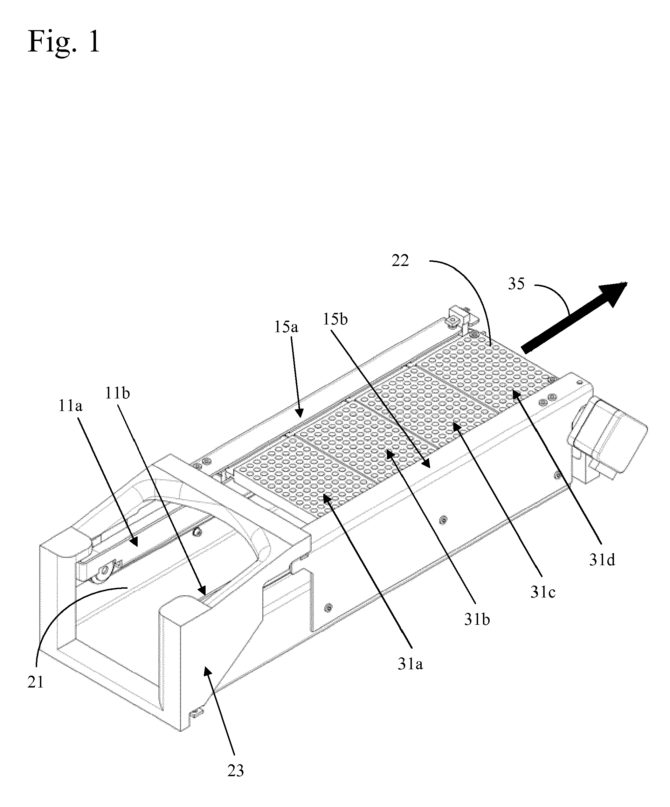

Fig. 1 shows a device according to the invention for supplying in a continuous manner a plurality of disposable tips to a pipetting system (not shown). The device comprises a pair of guiding rails 11a, 11b. The pair of guiding rails 11a, 11b, is adapted for guiding a plurality of tip trays 31a, 31b, 31c, 31 d from a loading position 21 to a supply position 22, along a direction of movement as indicated by the arrow 35.

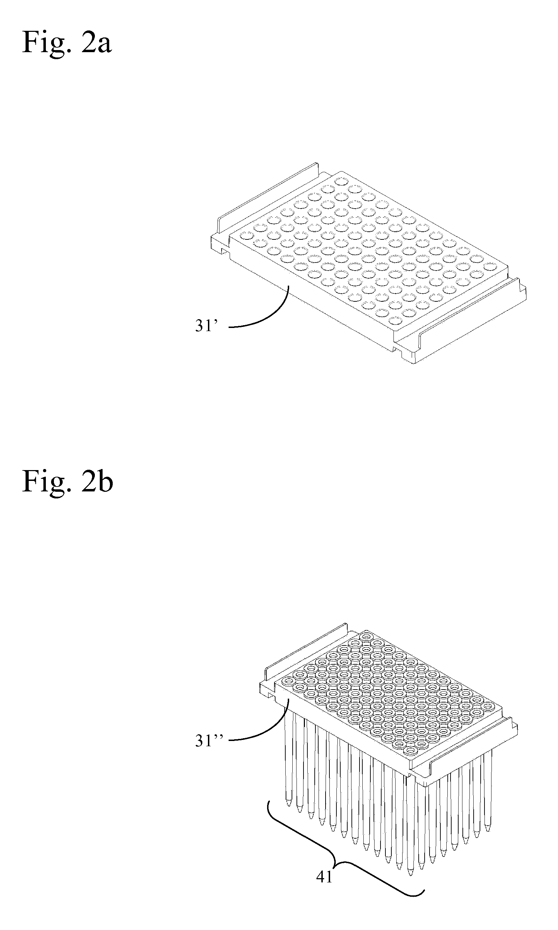

As shown in Figs. 2a and 2b, the plurality of tip trays 31 a, 31b, 31 c, 31 d is adapted to hold the plurality of disposable tips. Fig. 2a shows a first particular one 31' of the plurality of tip trays 31 a, 31b, 31 c, 31 d without a single one of the plurality disposable tips placed thereon. Fig. 2b shows the first particular one 31' of the plurality of tips trays 31a, 31b, 31c, 31d loaded with the subset 41 of the plurality of disposable tips. In this way, every one of the plurality of tip trays 31 a, 31b, 31 c, 31 d may have a subset of the plurality of disposable tips placed thereon, respectively.

A supplying one 31 d of the plurality of tip trays 31 a, 31b, 31 c, 31 d, located at the supply position 22, is accessible by a means (not shown) for selecting and delivering to the pipetting system selected ones of the subset of the plurality of disposable tips held by the supplying one 31 d of the plurality of tip trays 3 1 a, 3 1 b, 3 1 c, 3 1 d.

When the subset of the plurality of disposable tips held by the supplying one 3 1 d of the plurality of tip trays 31 a, 31b, 31 c, 31 d has been consumed, the supplying one 31 d of the plurality of tip trays 31 a, 31b, 31 c, 31 d is empty and can be discharged. In one aspect of the invention, the supplying one 31 d of the plurality of tip trays 31 a, 31b, 31 c, 31d is pushed or moved in the direction of movement 35 of the pair of guiding rails 11a, 11b and into a container (not shown).

It is an advantage of the present invention that the device automatically removes empty ones of the plurality of tip trays 31 a, 31b, 31 c, 31 d from the supply position 22. The user does thus not have to take care of removing the empty ones of the plurality of tip trays 31a, 31b, 31 c, 31 d from the supply position 22. The user thus can concentrate on other tasks and make use of his time more efficiently.

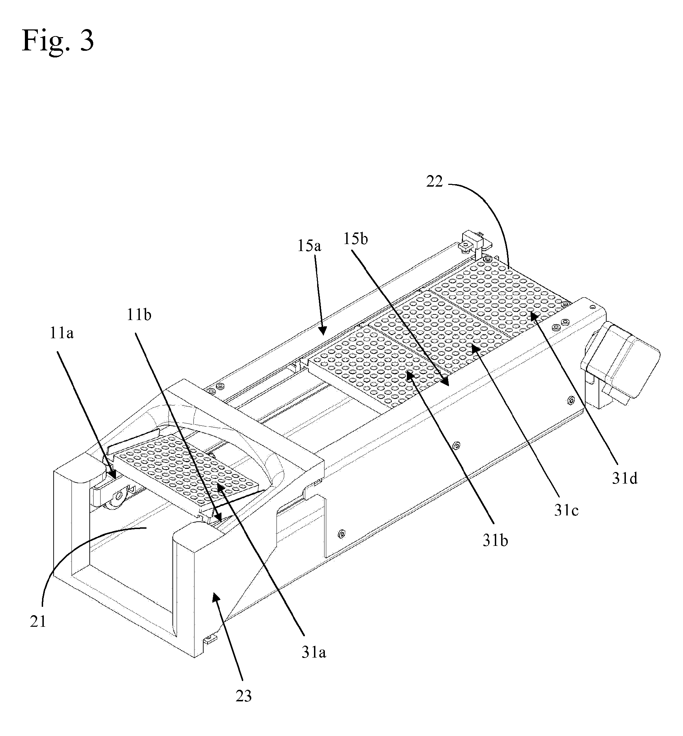

Fig. 3 shows a first one 31a of the plurality of tip trays 31 a, 31b, 31 c, 31 d in the course of being loaded onto the pair of guiding rails 11 a, 11b at the loading position 21. The loading position 21 is accessible by a user (not shown) or by a loading means (not shown) for loading the plurality of tip trays 31 a, 31b, 31 c, 31 d onto the pair of guiding rails 11a, 11b. The user or the loading means places or loads the first one 31a of the plurality of tip trays 31 a, 31b, 31 c, 31 d through an opening of the loading frame 23 onto the pair of guiding rails 11a, 11b. After the first one 31 a of the plurality of tip trays 31 a, 31b, 31 c, 31 d has been placed or loaded on the pair of guiding rails 11a, 11b, the first one 31a of the plurality of tip trays 31 a, 31b, 31 c, 31d can be moved towards the supply position 22 along the direction of movement, as indicated by arrow 35 in Fig. 1.

It is an advantage of the present invention to provide a loading frame 23. The loading frame 23 may assist the user or the loading means in loading the plurality of tip trays 31a, 3b, 31c, 31d onto the pair of guiding rails 11a, 11b. Thereby the process of loading the plurality of tip trays 31 a, 31b, 31c, 31d becomes easier and faster.

It is a further advantage of the present invention that the loading position 21 is open and permanently accessible by the user. A user can load a further one of the plurality of tip trays 31 a, 31b, 31c, 31d onto the guiding rails 11a, 11b whenever there is free space for the further one of the plurality of tip trays 31 a, 31b, 31 c, 31 d on the pair of guiding rails 11 a, 11b, and whenever it is suitable for the user. The user can thus work more efficiently.

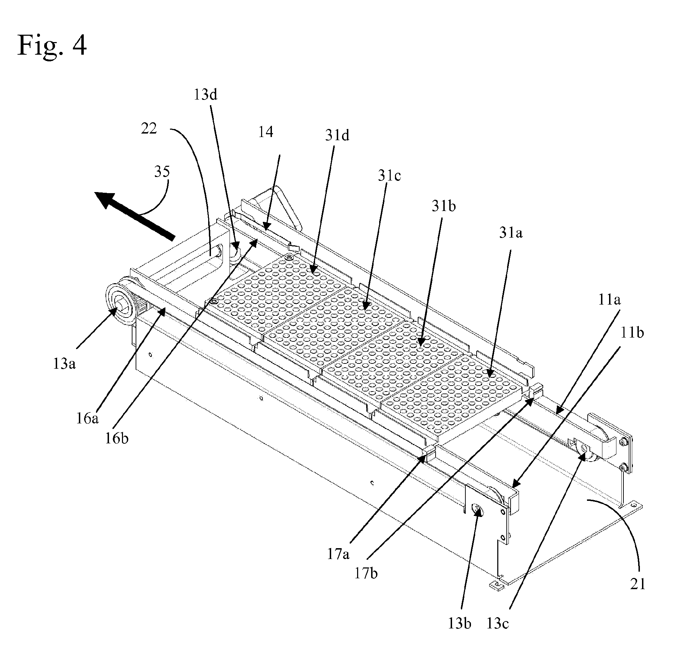

Fig. 4 shows the device according to the invention without the loading frame 23 and housing elements 15a, 15b (see. Figs. 1 and 3) removed. As can be seen in Fig. 4, the device further comprises at least one belt 16a, 16b with at least one cam 17a, 17b attached to the at least one belt 16a, 16b. The at least one belt 16a, 16b is driven to move in the direction of movement 35 by a plurality of pulleys 13a, 13b, 13c, 13d. The plurality of pulleys 13a, 13b, 13c, 13d are driven by a motor (not shown). The at least one belt 16a, 16b is so arranged that the at least one cam 17a, 17b pushes the plurality of trays 3 1 a, 31b, 31c, 31d in the direction of movement 35.

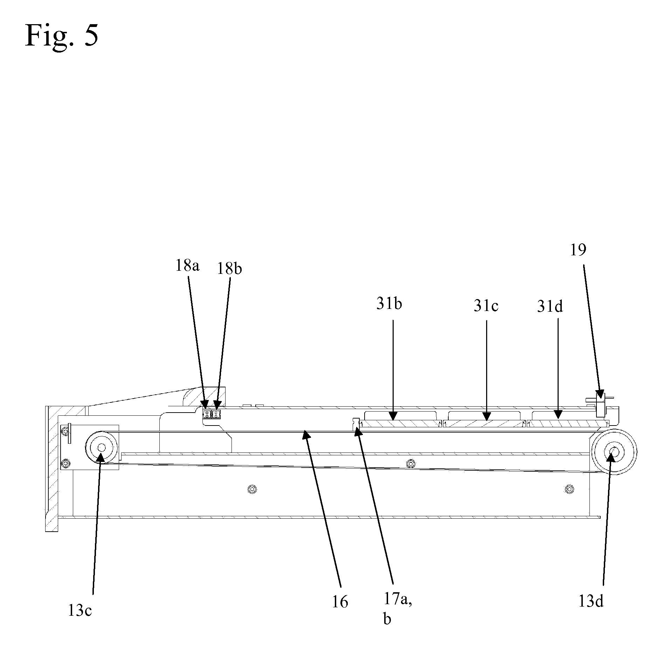

The device further comprises at least two sensors for monitoring the loading of the first one 31a and the removing of the supplying one 31d of the plurality of tip trays 31a, 31b, 31c, 31d. In one aspect of the invention, as shown in Fig. 5, at least one first light barrier 18a, 18b is arranged in proximity of the loading position 21, and at least one second light barrier 19 is arranged in proximity to the supply position 22. The at least one first light barrier 18a, 18b senses a loading of the first one 31a (not shown in Fig. 5) of the plurality of tip trays 31 a, 31b, 31c, 31d. The at least one second light barrier 19 senses a removal of the supplying one 31d of the plurality of tip trays 31 a, 31b, 31c, 31d.

The at least one first light barrier 18a, 18b and the at least one second light barrier 19 transmit data relating to the loading of the first one 31a and the removal of the supplying one 31 d, respectively, of the plurality of tip trays 31 a, 31b, 31 c, 31 d to a controller (not shown). The controller controls the motor driving the pulleys 13 a, 13b, 13c, 13d.

As can further be seen in Fig. 4, the device comprises a position means 14. The positioning means is suitable for positioning the supplying one 31d of the plurality of tip trays 31a, 31b, 31c, 31d in a substantially precise location at the supply position 22. In one aspect of the present invention, as shown in Fig. 4, the positioning means 14 may be a positioning spring.

It is an advantage of the present invention to provide the positioning means 14. The positioning means helps in avoiding errors in the delivering of the selected ones of the subset of the plurality of disposable tips held by the supplying one 31d of the plurality of tip trays 31 a, 31b, 31c, 31d.

In one aspect of the invention, the controller produces a signal relating to a loading status of the device. The signal may be of acoustical and/or optical type, but is not limited thereto. The signal may indicate that the plurality of disposable tips has or nearly has been consumed. The signal may further relate to different types of the loading status.

It is an advantage of the present invention that the device indicates the loading status to the user. The user can thus react to the signal when he perceives the signal. Thus, the user can concentrate on other tasks while the device is supplying the pipetting system with the plurality of disposable tips.

## Claims

1. A device for supplying in a continuous manner a plurality of disposable tips to a pipetting system, the device comprising at least one guiding rail 11a, 11b for guiding a plurality of tip trays 31 a, 31b, 31 c, 31 d holding the plurality of disposable tips from a loading position 21 to a supply position 22, wherein
- the loading position 21 is accessible by a user or a loading means for loading the plurality of tip trays 31 a, 31b, 31 c, 31 d on the at least one guiding rail 11a, 11b,
- the plurality of disposable tips is accessible at the supply position 22 by a means for delivering at least one selected one of the plurality of disposable tips to the pipetting system, and
- the device is adapted for removal of at least one supplying one 31d of the plurality of tip trays 31 a, 31b, 31 c, 31 d from the supply position 22.

2. The device according to claim 1, further comprising a container for the discharge of the at least one supplying one 31 d of the plurality of tip trays 31 a, 31 b, 31 c, 31 d removed from the supply position 22.

3. The device according to claim 1 or 2, wherein the device comprises a means for monitoring consumption of the at least one selected one of the plurality of disposable tips.

4. The device according to any one of claims 11to 3, further comprising a means for moving the plurality of tip trays 31a, 31b, 31 c, 31 d along the at least one guiding rail 11a, 11b.

5. The device according to claim 4, wherein the means for moving the plurality of tip trays 31a, 31b, 31c, 31d along the at least one guiding rail 11a, 11b comprises at least one belt 16a, 16b, at least one cam 17a, 17b attached to the belt 16a, 16b, and at least one motor for moving the belt 16a, 16b using a plurality of pulleys 13a, 13b, 13c, 13d, wherein the at least one cam 17a, 17b is adapted to push at least one contacted one of the plurality of tip trays 31a, 31b, 31c, 31d.

6. The device according to claim 4 or 5, further comprising a controller for controlling the means for moving the plurality of tip trays 31 a, 31b, 31 c, 31 d along the at least one guiding rail 11a, 11b, and for controlling the removal of the at least one supplying one 31d of the plurality of tip trays 31a, 31b, 31c, 31d from the supply position 22, the controller receiving data pertaining to the consumption of the at least one selected one of the plurality of disposable tips.

7. The device according to any one of claims 11to 6, further comprising a plurality of sensors for monitoring of the loading of the plurality of tip trays and of the removal of the at least one supplying one 31 d of the plurality of tip trays 31 a, 31b, 31c, 31 d from the supply position 22, wherein the plurality of sensors transmits to the controller data pertaining to the monitoring.

8. The device according to claim 7, wherein the plurality of sensors comprises at least one first light barrier 18a, 18b in proximity to the loading position 21 and at least one second light barrier 19 in proximity to the supply position 22.

9. The device according to any one of claims 1 to 8, further comprising positioning means 14 for positioning of the at least one supplying one 31 d of the plurality of the tip trays 31 a, 31b, 31 c, 31 d located at the supply position 22.

10. A method for supplying in a continuous manner a plurality of disposable tips to a pipetting system, the method comprising the steps of:
- loading at a loading position 21 at least one tip tray holding at least one disposable tip,
- moving of the at least one tip tray to a supply position 22,
- delivering to a pipetting system of the at least one disposable tip ,
- removing of the at least one tip tray from the supply position 22.

11. The method according to claim 10, wherein the moving of the at least one tip tray to the supply position 22 comprises moving the at least one tip tray along at least one guiding rail 11a, 11b.

12. The method according to claim 10 or 11, wherein the loading at the loading position 21 of the at least one tip tray 31a, 31b, 31c, 31d holding the at least one disposable tip comprises a monitoring thereof and a transmitting of first data related thereto to a controller.

13. The method according to claim 12, wherein the monitoring of the loading comprises optically detecting a presence or absence at the loading position 21 of the at least one tip tray 31a, 31b, 31c, 31d.

14. The method according to any one of claims 10 to 13, wherein the moving of the at least one tip tray 31 a, 31b, 31 c, 31d to the supply position 22 comprises a controlling thereof.

15. The method according to any one of claims 10 to 14, wherein the removing of the at least one tip tray 31a, 31b, 31c, 31d from the supply position 22 comprises a monitoring thereof and a transmitting of second data related thereto to a controller.

16. The method according to claim 15, wherein the monitoring of the removing comprises optically detecting a presence or absence at the supply position 22 of the at least one tip tray 31a,31b,31c,31d.

17. The method according to any one of claims 10 to 16, wherein the removing of the at least one tip tray 31a, 31b, 31 c, 31 d from the supply position 22 comprises discharging the at least one tip tray 31a, 31b, 31 c, 31 d from the supply position 22 into a container.
